Europäisches Patentamt

European Patent Office

Office européen des brevets

(19)

(11) Veröffentlichungsnummer: **0 025 080**
**B1**

(12) **EUROPÄISCHE PATENTSCHRIFT**

(45) Veröffentlichungstag der Patentschrift: **08.02.84**

(51) Int. Cl.³: **F 23 C 11/02, F 23 K 3/00**

(21) Anmeldenummer: **80102332.6**

(22) Anmeldetag: **30.04.80**

(54) **Verfahren und Anordnung zum Zuführen eines zerkleinerten festen Brennstoffs in eine Wirbelbettfeuerung.**

(30) Priorität: **08.06.79 DE 2923250**
**05.10.79 DE 2940358**

(43) Veröffentlichungstag der Anmeldung:
**18.03.81 Patentblatt 81/11**

(45) Bekanntmachung des Hinweises auf die Patenterteilung:
**08.02.84 Patentblatt 84/6**

(84) Benannte Vertragsstaaten:
**AT BE DE FR GB IT NL SE**

(56) Entgegenhaltungen:
**DD - A - 141 056**
**DE - A - 2 613 816**
**DE - A - 2 732 186**
**US - A - 4 130 071**

(73) Patentinhaber: **BABCOCK-BSH AKTIENGESELLSCHAFT vormals Büttner-Schilde-Haas AG**
**Parkstrasse 29 Postfach 4 und 6**
**D-4150 Krefeld 11 (DE)**

(72) Erfinder: **Baunack, Fritz, Dr.-Ing.**
**Überm Hof 17**
**D-6430 Bad Hersfeld (DE)**

(74) Vertreter: **Planker, Karl-Josef, Dipl.-Phys.**
**c/o BABCOCK-BSH AKTIENGESELLSCHAFT**
**Postfach 4 + 6**
**D-4150 Krefeld 11 (DE)**

### Verfahren und Anordnung zum Zuführen eines zerkleinerten festen Brennstoffs in eine Wirbelbettfeuerung

Die Erfindung betrifft ein Verfahren zum Zuführen eines zerkleinerten festen Brennstoffs in eine Wirbelbettfeuerung, wobei in einem vorgeschalteten Wirbelbett ein grobkörniger Anteil des Brennstoffs von einem feinkörnigen Anteil getrennt wird, wobei der feinkörnige Anteil über Förderrohre mittels eines Gasstromes in die Wirbelbettfeuerung eingeblasen wird und wobei das im vorgeschalteten Wirbelbett zugeführte Wirbelgas als Fördergas verwendet wird.

Ferner betrifft die Erfindung eine Anordnung zum Zuführen eines zerkleinerten festen Brennstoffs in eine Wirbelbettfeuerung, mit einem vorgeschalteten Wirbelbett und mit mehreren als Überlaufrohre ausgebildeten Förderrohren zum Einblasen des feinkörnigen Brennstoffanteils in die Wirbelschichtfeuerung mit Hilfe des aus dem vorgeschalteten Wirbelbett austretenden Wirbelgas.

Der Stand der Technik, auf dem die Erfindung aufbaut, geht aus der DE—A1—27 32 186 hervor. Bei dem darin beschriebenen Verfahren werden die grobkörnigen Bestandteile des Brennstoffs einer Mahlvorrichtung zugeführt und die so erhaltenen zerkleinerten Teilchen wieder in das vorgeschaltete Wirbelbett zurückgeführt. Bei der zugehörigen Anordnung steht das vorgeschaltete Wirbelbett, soweit aus der schematischen Zeichnung ersichtlich, seitlich der Wirbelbettfeuerung. Der feinkörnige Anteil des Brennstoffs wird seitlich in die Wirbelbettfeuerung eingeblasen.

Außerdem ist aus der DD—A—141 056 eine Anordnung zum Zuführen von festen Brennstoffen in eine Wirbelbettfeuerung bekannt, bei der ein vorgeschaltetes Wirbelbett, das hierbei zum Vorheizen des Brennstoffs dient, über der Wirbelbettfeuerung angeordnet ist. Dem vorgeschalteten Wirbelbett wird als Wirbelgas das Rauchgas der Wirbelbettfeuerung zugeführt. Zur Förderung des Brennstoffs dient ein senkrechtes Rohr, das in dem vorgeschalteten Wirbelbett als Überlaufrohr ausgebildet ist und mit seinem unteren Ende in die Wirbelbettfeuerung eintaucht. Eine Abtrennung eines grobkörnigen Brennstoffanteils ist nicht vorgesehen. Der Brennstofftransport vom vorgeschalteten Wirbelbett zur Wirbelbettfeuerung erfolgt offensichtlich im freien Fall. Jedenfalls wird das Wirbelmedium des vorgeschalteten Wirbelbetts nicht als Fördermedium benutzt, sondern verläßt das vorgeschaltete Wirbelbett über eine eigens vorgesehene Abgasleitung.

Eine erste der vorliegenden Erfindung zugrunde liegende Aufgabe beseht darin, bei einem Verfahren der eingangs, angegebenen Gattung die Zufuhr des grobkörnigen Anteils zu vereinfachen. Eine zweite Aufgabe besteht darin, eine vereinfachte Anordnung zur Durchführung des Verfahrens anzugeben, die eine gute Brennstoffverteilung in der Wirbelschichtfeuerung gewährleistet.

Die erste Aufgabe wird durch die kennzeichnenden Merkmale des Anspruchs 1 gelöst. Durch die unmittelbare Zuführung des grobkörnigen Brennstoffanteils erübrigt sich die Zwischenschaltung einer Zerkleinerungsstufe.

Bei der bevorzugten Verfahrensvariante gemäß Anspruch 2 ist das Wirbelgas als Verbrennungsluft nutzbar.

Die zweite Aufgabe wird durch die kennzeichnenden Merkmale des Anspruchs 3 gelöst.

Durch das Merkmal des Anspruchs 4 wird eine besonders gute Verteilung des Brennstoffs in der Wirbelbettfeuerung erreicht.

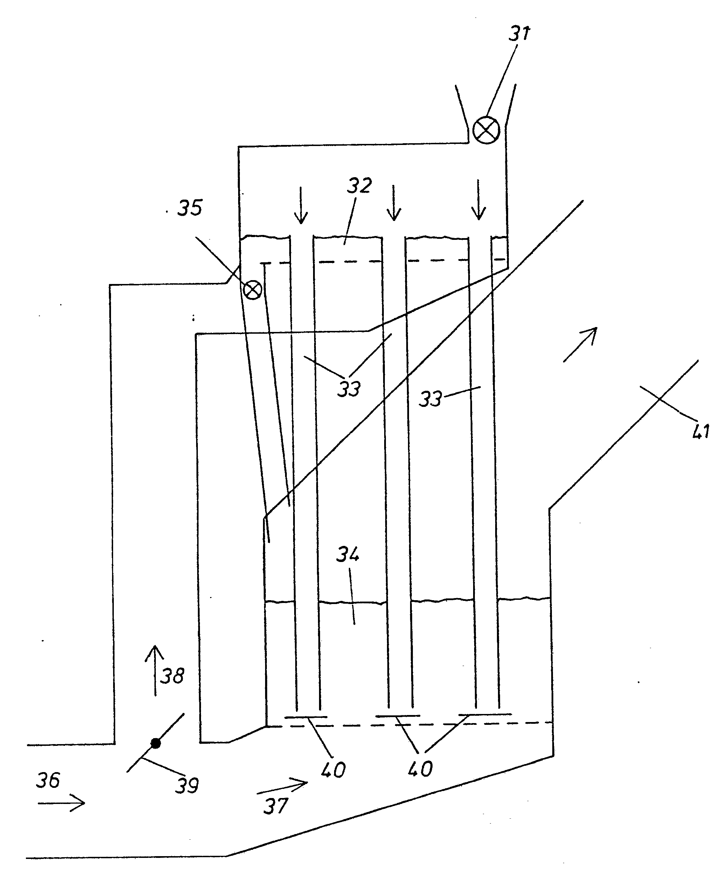

Die Zeichnung dient zur Erläuterung der Erfindung anhand eines schematisch dargestellten Ausführungsbeispiels.

Der zerkleinerte, zur Verbrennung in der Wirbelbettfeuerung 34 bestimmte Brennstoff gelangt über ein regelbares Dosier- und Abschlußorgan 31, welches beispielsweise ein Zellenrad ist, in eine vorgeschaltetes Wirbelbett 32. In diesem sind mehrere Förderrohre 33 verteilt, die als Überlaufrohre ausgebildet sind. Durch die Förderrohre 33 wird der aufgewirbelte und überlaufende feinkörnige Anteil des Brennstoffs der Wirbelbettfeuerung 34 zugeführt. Dieser Vorgang wird durch das aus dem vorgeschalteten Wirbelbett 32 durch die Förderrohre 33 abfließende Wirbelgas unterstützt. Der im vorgeschalteten Wirbelbett 32 verbleibende grobkörnige Brennstoffanteil wird über ein Zellenrad 35 ausgetragen und unmittelbar der Wirbelbettfeuerung 34 zugeführt. Die Förderrohre 33 sind an ihren feuerungsseitigen Enden mit Prallplatten 40 versehen.

Bei dem dargestellten Ausführungsbeispiel wird als Wirbelgas für das vorgeschaltete Wirbelbett 32 Luft verwendet. Der zugeführte Gesamtluftstrom 36 wird mit Hilfe einer Klappe 39 in die Teilströme 37 und 38 aufgeteilt. Der Teilstrom 38 wird als Wirbelgas in das vorgeschaltete Wirbelbett 32 eingeleitet, der Teilstrom 37 wird als Wirbel- und Verbrennungsluft direkt in die Wirbelbettfeuerung 34 eingeblasen. Der Abzug des Rauchgases erfolgt über den Kanal 41.

### Patentansprüche

1. Verfahren zum Zuführen eines zerkleinerten festen Brennstoffs in eine Wirbelbettfeuerung (34), wobei in einem vorgeschalteten Wirbelbett (32) ein grobkörniger Anteil des Brennstoffs von einem feinkörnigen Anteil getrennt wird, wobei der feinkörnige Anteil über Förderrohre (33) mit einem Gasstrom in die Wirbelbettfeuerung (34) eingeblasen wird und wobei das dem vorgeschalteten Wirbelbett (32) zugeführte Wirbelgas als Fördergas verwendet wird, dadurch gekennzeichnet, daß der grobkörnige Anteil getrennt von dem feinkörnigen Anteil unmittelbar der Wirbelschichtfeuerung (34) zugeführt wird.

2. Verfahren nach Anspruch 1, dadurch gekennzeichnet, daß dem vorgeschalteten Wirbelbett (32) Luft als Wirbelgas zugeführt wird.

3. Anordnung zur Durchführung des Verfahrens nach Anspruch 1 oder 2, mit einem vorgeschalteten Wirbelbett (32) und mit mehreren als Überlaufrohre ausgebildeten Förderrohren (33) zum Einblasen des feinkörnigen Brennstoffanteils in die Wirbelschichtfeuerung (34) mit Hilfe des aus dem vorgeschalteten Wirbelbett (32) austretenden Wirbelgases, dadurch gekennzeichnet, daß das vorgeschaltete Wirbelbett (32) über der Wirbelbettfeuerung (34) angeordnet ist, daß eine zusätzliche Fördereinrichtung (35) für die Förderung des grobkörnigen Anteils von dem vorgeschalteten Wirbelbett (32) unmittelbar zu der Wirbelbettfeuerung (34) vorgesehen ist und daß die Förderrohre (33) in die Wirbelbettfeuerung (34) eintauchen.

4. Anordnung nach Anspruch 3, dadurch gekennzeichnet, daß die Förderrohre (33) an ihren feuerungsseitigen Enden mit Prallplatten (40) versehen sind.

## Revendications

1. Procédé d'amenée d'un combustible solide pulvérisé dans un réacteur à lit fluidisé (34), dans lequel, dans un lit fluidisé agencé en amont (32), une fraction à granulation grossière du combustible est séparée d'une fraction à granulation fine, la fraction à granulation fine étant, par l'intermédiaire de conduits de transfert (33), insufflée avec un courant gazeux dans le réacteur à lit fluidisé (34), le gaz tourbillonnaire amené au lit fluidisé agencé en amont (32) étant utilisé comme gaz porteur, caractérisé en ce que la fraction à granulation grossière est, séparément de la fraction à granulation fine, amenée directement au réacteur à lit fluidisé (34).

2. Procédé suivant la revendication 1, caractérisé en ce que de l'air est amené au lit fluidisé agencé en amont (32), à titre de gaz tourbillonnaire.

3. Dispositif pour la mise en oeuvre du procédé suivant l'une des revendications 1 et 2, comprenant un lit fluidisé agencé en amont (32) et plusieurs conduits de transfert (33) qui sont réalisés sous la forme de tuyaux de trop-plein et sont destinés à insuffler la fraction de combustible à granulation fine dans le réacteur à lit fluidisé (34) à l'aide du gaz tourbillonnaire qui sort du lit fluidisé agencé en amont (32), caractérisé en ce que le lit fluidisé agencé en amont (32) est agencé au-dessus du réacteur à lit fluidisé (34), en ce qu'un dispositif de transport supplémentaire (35) est prévu pour le transport de la fraction à granulation grossière depuis le lit fluidisé agencé en amont (32) directement dans le réacteur à lit fluidisé (34), et en ce que les conduits de transfert (33) plongent dans le réacteur à lit fluidisé (34).

4. Dispositif suivant la revendication 3, caractérisé en ce que les conduits de transfert (33) sont pourvus de plaques de rebondissement (40) à leur extrémité du côté réacteur.

## Claims

1. Process for feeding a comminuted solid fuel to a fluidized-bed furnace (34) when in a preceding fluidized bed (32) a coarse-grain part of the fuel is separated from a fine-grain part, the fine-grain part being blown into the fluidized-bed furnace (34) in a gas flow through conveyor pipes (33), the conveying gas being the fluidizing gas previously passed to the preceding fluidized bed (32), characterized by the coarse-grain part of the fuel being separated from the fine-grain part immediately before the fluidized-bed furnace (34).

2. Process in accordance with claim 1, characterized by air being used as fluidizing gas for the preceding fluidized bed (32).

3. Arrangement for carrying out the process in accordance with claim 1 or 2, with a preceding fluidized bed (32) and a number of conveyor pipes of the overflow type (33) for blowing the fine-grain part of the fuel into the fluidized-bed furnace (34) by means of the fluidizing gas from the preceding fluidized bed (32), characterized by the preceding fluidized bed (32) being arranged above the fluidized-bed furnace (34), by an additional conveyor (35) being provided for passing the coarse-grain part of the fuel from the preceding fluidized bed (32) direct to the fluidized-bed furnace (34), and by the conveyor pipes (33) being immersed into the fluidized-bed furnace (34).

4. Arrangement in accordance with claim 3, characterized by the conveyor pipes (33) being provided with impact plates (40) at their furnace ends.